# EUROPÄISCHE PATENTANMELDUNG

(11) **EP 1 593 827 A2**
(43) Veröffentlichungstag der Anmeldung: **09.11.2005**
(21) Anmeldenummer: 05103170.6
(22) Anmeldetag: 20.04.2005
(51) Int. Cl.: F02D 41/22

(54) **Steuerverfahren für eine Schaltklappe sowie Schaltklappen-Stelleinheit**

(30) Priorität: 05.05.2004 DE 102004022055
(71) Anmelder: Pierburg GmbH, 41460 Neuss (DE)
(72) Erfinder: Ludwig, Norbert, 41379 Brüggen (DE); Bürger, Frank, 52355 Düren (DE); Witte, Hartmut, 41466 Neuss (DE)
(74) Vertreter: von Kirschbaum, Alexander

(57) **Zusammenfassung**

Bei einem Steuerverfahren für eine Schaltklappe, die in einem mit einer Brennkraftmaschine verbundenem Saugrohr angeordnet ist, wird die Schaltklappe (10) mittels einer mit einem Elektromotor (18) verbundenen Schaltklappenwelle (12) gedreht. Mit Hilfe einer Positionseinrichtung (22, 26; 24, 26) wird eine Endposition der Schaltklappe (10) erfasst. Anschließend wird die Welle mit einer weiteren Drehkraft beaufschlagt, um die Schaltklappe (10) in der Endposition zu halten. Um einen Wellenbruch der Schaltklappenwelle (12) detektieren zu können, wird bei einem Weiterdrehen der Schaltklappenwelle über die Endposition hinaus eine Fehlermeldung erzeugt.

## Beschreibung

Die Erfindung betrifft ein Steuerverfahren für eine Schaltklappe sowie eine Schaltklappen-Stelleinheit.

Schaltklappen sind in Saugrohren angeordnet, die mit den Zylindern einer Brennkraftmaschine verbunden sind. Ein derartiges Luftansaugkanalsystem ist beispielsweise aus DE 196 14 474 bekannt. Das hierin beschriebene Luftansaugkanalsystem weist für jeden Zylinder einen spiralförmig verlaufenden Luftansaugkanal auf. Das Ansaugen der Luft erfolgt über einen zentralen, innerhalb der spiralförmigen Ansaugkanäle angeordneten Sammel-Einlasskanal. Durch den für sämtliche Luftansaugkanäle gemeinsam vorgesehenen Sammel-Einlasskanal wird Luft angesaugt und über die einzelnen Luftansaugkanäle zu den Zylindern der Brennkraftmaschine geleitet. Um die Länge eines Luftansaugkanals verändern zu können, ist ein Kurzschlusskanal vorgesehen, der mit einer Schaltklappe geöffnet oder geschlossen werden kann. Die einzelnen Schaltklappen sind bei dem in DE 196 14 474 beschriebenen Luftansaugkanalsystem über eine gemeinsame Welle miteinander verbunden. Es können jedoch auch mehrere Schaltklappenwellen, insbesondere auch je Schaltklappe eine eigene Schaltklappenwelle, vorgesehen sein. Ferner sind auch Luftansaugkanalsysteme bekannt, bei denen die Luftansaugkanäle nicht spiralförmig um einen Sammel-Einlasskanal verlaufen, sondern insbesondere bei einem Reihen-Motor parallel zueinander verlaufen. Hierbei ist die Form der Luftansaugkanäle beispielsweise den äußeren Gegebenheiten, insbesondere dem vorhandenen Platz angepasst. Zur Variation der Luftansaugkanal-Länge weisen auch derartige Luftansaugkanalsysteme Schaltklappen, die mit einer Schaltklappenwelle verbunden sind, auf. Die gemeinsame oder die einzelnen Schaltklappenwellen sind über ein Schneckengetriebe mit einem Zahnsegment, d. h. einem Kreissegment eines Zahnrads verbunden. Das Zahnsegment ist mit der Schaltklappenwelle verbunden, die eine oder mehrere Schaltklappen trägt. Hierbei dient das Zahnsegment als Anschlag, so dass zwei Endstellungen der Schaltklappe definiert sind.

Derartige Schaltklappen-Stelleinheiten weisen den Nachteil auf, dass das Zahnsegment in den Endstellungen verklemmen kann. Ferner kann eine Beschädigung der Schaltklappenwelle oder der Schaltklappe selbst nicht festgestellt werden. Insbesondere ist ein Prüfen der Funktionsfähigkeit der Schaltklappe nicht möglich. Ferner ist ein Abreißen der Schaltklappenwelle nicht feststellbar. Somit ist der Sicherheitsstandart OBD 2 nicht gewährleistet.

Zur Detektion eines Bruchs der Schaltklappenwelle ist es aus DE 102 15 927 bekannt, die Welle in Längsrichtung mit einem elektrischen Leiter zu versehen, an dem ein Potential anliegt. Bei einem Wellenbruch wird auch der elektrische Leiter durchtrennt, so dass auf Grund der Potentialänderung eine Detektion des Wellenbruchs möglich ist. Hierbei erfolgt der elektrische Kontakt zwischen dem Leiter und einer Auswerteeinrichtung über elektrisch leitfähige Lagerbuchsen. Dies hat zur Folge, dass ein Bruch der Welle außerhalb der Lager oder ein Beschädigen des Wellenansatzes, bzw. der Verbindung zwischen der Schaltklappenwelle und einem Schneckengetriebe, nicht detektiert werden kann.

Ferner besteht bei Schaltklappen-Stelleinheiten das Problem, dass die Stellung der einzelnen Bauteile beim Einbau exakt definiert sein muss. Dies ist insbesondere problematisch, wenn die Stelleinheit zur Funktionsprüfung ausgebaut wurde.

Aufgabe der Erfindung ist es, ein Steuerverfahren sowie eine Schaltklappen-Stelleinheit für eine Schaltklappe zu schaffen, mit dem auf einfache Weise die Funktionsfähigkeit der Schaltklappe sicher gestellt und/ oder die Einbauvorbereitung vereinfacht werden kann.

Die Lösung der Aufgabe erfolgt erfindungsgemäß durch die Merkmale des Patentanspruchs 1, 5 und/ oder 9.

Gemäß dem erfindungsgemäßen Steuerverfahren für eine Schaltklappe, bei der es sich insbesondere um eine in einem mit einer Brennkraftmaschine verbundenen Saugrohr angeordnete Schaltklappe handelt, wird die Schaltklappe, die mit einer Schaltklappenwelle verbunden ist, mittels eines Elektromotors gedreht. Hierbei erfolgt das Drehen bzw. Schwenken der Schaltklappe, beispielsweise von einer Endposition in die andere Endposition, wobei beispielsweise ein Kurzschlusskanal des Saugrohrs in einer Endposition geöffnet und in der anderen geschlossen ist. Zumindest eine, vorzugsweise beide Endpositionen werden durch eine Positionseinrichtung erfasst, wobei die Positionseinrichtung vorzugsweise zwei mit den Schaltklappenwelle verbundene Signalgeber und einen ortsfesten Positionssensor aufweist. Insbesondere handelt es sich bei dem Positionssensor um einen Drehwinkelsensor. Bei dem Positionssensor handelt es sich vorzugsweise um einen Hall-Sensor, ein Potentiometer etc.. Um ein sicheres Halten der Schaltklappe in der Endposition zu gewährleisten, wird die Schaltklappenwelle in der Endposition mit einer Drehkraft beaufschlagt, die die Schaltklappe gegen einen Anschlag oder dgl. drückt. Hierdurch ist ein Verändern der Stellung der Schaltklappe auf Grund von Luftströmungen, Vibrationen oder dgl. vermieden.

Erfindungsgemäß wird eine Fehlermeldung erzeugt, wenn ein Weiterdrehen der Schaltklappenwelle über die Endposition hinaus detektiert wird. Wenn als Positionssensor ein Drehwinkelsensor, wie ein Potentiometer, eingesetzt wird, ist ein Erfassen des Weiterdrehens auf Grund der Drehwinkelposition möglich. Vorzugsweise erfolgt jede Position-Bestimmung mit Hilfe jeweils eines Signalgebers je Endposition. Die Signalgeber, bei denen es sich vorzugsweise um Magnete, insbesondere um Stiftmagnete handelt, sind mit der Schaltklappenwelle verbunden und kommunizieren mit einem ortsfesten Positionssensor, insbesondere einem Hall-Schalter. Bei dem Weiterdrehen der Schaltklappenwelle wird durch den Signalgeber, der in der angefahrenen Endposition normalerweise kein Signal am Hall-Schalter erzeugt, ein Signal erzeugt. Dies wird von einer Steuereinrichtung als Fehlermeldung interpretiert, bzw. an eine Anzeigeeinrichtung oder dgl. weiter geleitet. Es ist somit möglich, auf einfache Weise einen Bruch der Schaltklappenwelle zu detektieren.

Insbesondere in Kombination mit der in DE 102 15 927 beschriebenen Wellenbruch-Erkennung über einen mit der Schaltklappenwelle verbundenen elektrischen Leiter, ist es möglich, die Beschädigung der Welle exakt zu lokalisieren. Wird beispielsweise durch die in DE 102 15 927 beschriebene Einrichtung die Funktionsfähigkeit der Welle bejaht, jedoch durch das erfindungsgemäße Verfahren eine Fehlermeldung erzeugt, so kann hieraus geschlossen werden, dass eine Beschädigung der Welle am Wellenansatz, bzw. außerhalb der Wellenlager, vorliegt.

Zur Durchführung des erfindungsgemäßen Steuerverfahrens wird das Zahnsegment vorzugsweise durch ein Voll-Zahnrad ersetzt, so dass eine Drehung des Zahnrads um 360° möglich ist. Bei der bevorzugten Ausführungsform, bei der zwei Signalgeber und ein Positionssensor vorgesehen sind, ist es ggf. ausreichend, das Zahnsegment entsprechend zu vergrößern, wobei sodann nach der Detektion eines Wellenbruchs der Elektromotor unmittelbar abgeschaltet werden sollte, damit das Zahnsegment bezüglich der Schnecke nicht außer Eingriff gerät. Das Vorsehen eines Voll-Zahnrads hat ferner den Vorteil, dass ein Verklemmen des Zahnsegments in einer Endstellung ausgeschlossen ist.

Gemäß des erfindungsgemäßen Steuerverfahrens zur Einbauvorbereitung für eine Schaltklappen-Stelleinheit, welches eine selbstständige Erfindung darstellt, wird die Schaltklappenwelle vor dem Einbau gedreht, bis einer der mindestens zwei Signalgeber an dem Positionssensor ein Signal erzeugt. Hierbei handelt es sich bei den Signalgebern vorzugsweise um Magnete, insbesondere Stabmagnete und bei dem Positionssensor, der ortsfest ist, um einen Hall-Schalter. Das von dem Signalgeber erzeugte Signal ist stellungsspezifisch. Dies bedeutet, dass das Signal eindeutig einer Stellung der Schaltklappe zugeordnet ist. Dies kann dadurch erreicht werden, dass von den in bevorzugter Ausführungsform zwei Signalgebern unterschiedliche Signale erzeugt werden. Dies ist dadurch möglich, dass die vorzugsweise als Magnete ausgebildeten Signalgeber in unterschiedlicher Stellung eingebaut werden, so dass bei einem Signalgeber der Nordpol und bei dem anderen Signalgeber der Südpol in Richtung des Positionssensors weist. Ebenso ist es möglich, Magnete mit unterschiedlicher Magnetstärke vorzusehen, so wie die Lage und die Magnetstärke insbesondere beim Vorsehen von mehr als zwei Signalgebern zu kombinieren.

Entspricht das von dem Positionssensor an eine Steuer- oder Auswerteeinrichtung weitergegebene stellungsspezifische Signal der vorgegebenen Einbaustellung, wird die Drehung der Schaltwelle angehalten, da sich die Schaltwelle sodann bereits in Einbaustellung befindet. Sofern das stellungsspezifische Signal noch nicht dem für die Einbaustellung vorgesehenen Signal entspricht, folgt ein Weiterdrehen der Schaltklappenwelle bis durch den nächsten Signalgeber ein Signal an dem Positionssensor erzeugt wird. Sofern es sich bei diesem Signal nunmehr um das für die Einbaustellung stellungsspezifische Signal handelt, wird die Drehung der Schaltklappenwelle angehalten, bzw. der Elektromotor ausgeschaltet. Sofern mehr als zwei Signalgeber vorgesehen sind, kann ein weiteres Weiterdrehen der Schaltwelle erforderlich sein.

Vorzugsweise erfolgt das Weiterdrehen in diejenige Richtung, in der der Weg zum Erreichen der Einbaustellung kürzer ist. Dies ist möglich, da die Lage der Signalgeber zueinander bekannt ist.

Ggf. ist zwischen dem Elektromotor und der Schaltklappenwelle ein Getriebe, insbesondere ein Schneckengetriebe angeordnet. Dies hat zur Folge, dass ein Zahnrad oder ein Zahnsegment des Getriebes vor dem Verbinden mit der Schaltwelle in die Einbaustellung gebracht werden soll, wobei anschließend die Schaltwelle sodann in einer vorgegebenen Lage mit dem Zahnrad bzw. dem Zahnsegment verbunden wird. Das Zahnrad bzw. Zahnsegment kann ebenfalls mit Hilfe des vorstehend beschriebenen Verfahrens zur Einbauvorbereitung in die Einbaustellung gebracht werden. Hierbei sind die Signalgeber nicht unmittelbar mit der Welle, sondern mit dem Zahnrad bzw. Zahnsegment verbunden.

Das Drehen der Schaltklappenwelle bzw. des Getriebes zum Erreichen der Einbaustellung erfolgt vorzugsweise langsam mit Hilfe der Puls-Weiten-Modulation. Sofern beispielsweise nach Erreichen des ersten Signalgebers der Zweite Signalgeber gefahren werden soll und daher eine relativ große Strecke zurückgelegt werden muss, kann auch ein schnelles Drehen der Schaltklappenwelle bzw. des Getriebes erfolgen.

Um die Schaltklappe der Schaltklappenanordnung zum Einbau in eine Einbaustellung zu bringen, wird somit vorzugsweise das Zahnrad bzw. die Schaltklappenwelle mit insbesondere voller Geschwindigkeit in eine definierte Drehrichtung gedreht. Nach dem Erreichen des ersten Signalgebers, bzw. nachdem ein erstes Hall-Signal erzeugt wurde, wird die Schaltklappenwelle bzw. das Zahnrad mit vorzugsweise geringerer Geschwindigkeit in die gleiche Drehrichtung weiter gedreht. Es erfolgt somit ein langsames Weiterdrehen der Schaltklappenwelle bis ein weiteres Hall-Signal erzeugt wird. Bei dieser Stellung der Schaltklappe bzw. des Zahnrades, die die Schaltklappe in eingebauten Zustand nicht erreichen kann, wird der Motor abgeschaltet. Der Antrieb befindet sich nunmehr in einer eindeutigen Stellung. Hierdurch kann der Einbau der Schaltklappen-Stelleinheit erleichtert werden.

Ferner betrifft die Erfindung eine Schaltklappen-Stelleinheit für eine Schaltklappe, die in einem mit einer Brennkraftmaschine verbundenem Saugrohr angeordnet ist. Die Schaltklappen-Stelleinheit weist einen Elektromotor auf, der mit einer Schaltklappenwelle verbunden ist. Ferner ist eine Positioniereinrichtung mit einem ortsfesten Positionssensor, insbesondere einem Hall-Schalter und mindestens zwei mit der Schaltklappenwelle verbundenen Signalgebern, insbesondere Stabmagneten, vorgesehen. Erfindungsgemäß weist die Schaltklappen-Stelleinheit Signalgeber auf, die stellungsspezifische Signale erzeugen. Ferner ist erfindungsgemäß ein einziger Positionssensor vorgesehen, der die unterschiedlichen stellungsspezifischen Signale erkennt. Hierbei handelt es sich in bevorzugter Ausführungsform bei dem Positionssensor um einen bipolaren oder programmierbaren Hall-Schalter.

Vorzugsweise ist zwischen dem Elektromotor und der Schaltklappenwelle ein Getriebe, insbesondere ein Schneckengetriebe, vorgesehen. Vorzugsweise weist das Schneckengetriebe ein Vollzahnrad auf. Hierbei ist es möglich, die Signalgeber unmittelbar an dem Vollzahnrad anzuordnen.

Die erfindungsgemäße Schaltklappen-Stelleinheit ist vorzugsweise, wie an Hand der vorstehend beschriebenen Verfahren beschrieben, weitergebildet.

Nachfolgend wird die Erfindung an Hand einer bevorzugten Ausführungsform unter Bezugnahme auf die anliegenden Zeichnungen näher erläutert.

### Es zeigen:

- Figur 1:: eine schematische Seitenansicht einer Schaltklappenanordnung,
- Figur 2:: eine schematische Schnittansicht entlang der Linie II-II in Figur 1 und
- Figur 3:: eine schematische Schnittansicht entlang der Linie III-III in Figur 1.

Eine Schaltklappe 10 ist über eine Schaltklappenwelle 12 mit einem Voll-Zahnrad 14 verbunden. Das Zahnrad 14 ist mit einer Schnecke 16 in Eingriff, die von einem Elektromotor 18 angetrieben wird.

Ferner ist mit der Schaltklappenwelle 12 eine Scheibe 20 bzw. einer entsprechenden Halterung verbunden, die zwei Signalgeber 22, 24 trägt. Ferner können die Signalgeber unmittelbar mit dem Zahnrad 14 verbunden sein, so dass das Vorsehen einer zusätzlichen Halterung nicht erforderlich ist. Die beiden Signalgeber 22, 24 korrespondieren mit einem Positionssensor 26, der ortsfest an einem Gehäuse 28 angeordnet ist. Durch den Positionssensor 26 wird ein Signal ausgelöst, sobald einer der Signalgeber 22, 24 dem Positionssensor 26 gegenüberliegend angeordnet ist. Das Signal wird an eine Steuer-/ Auswerteeinrichtung 30 weitergeleitet.

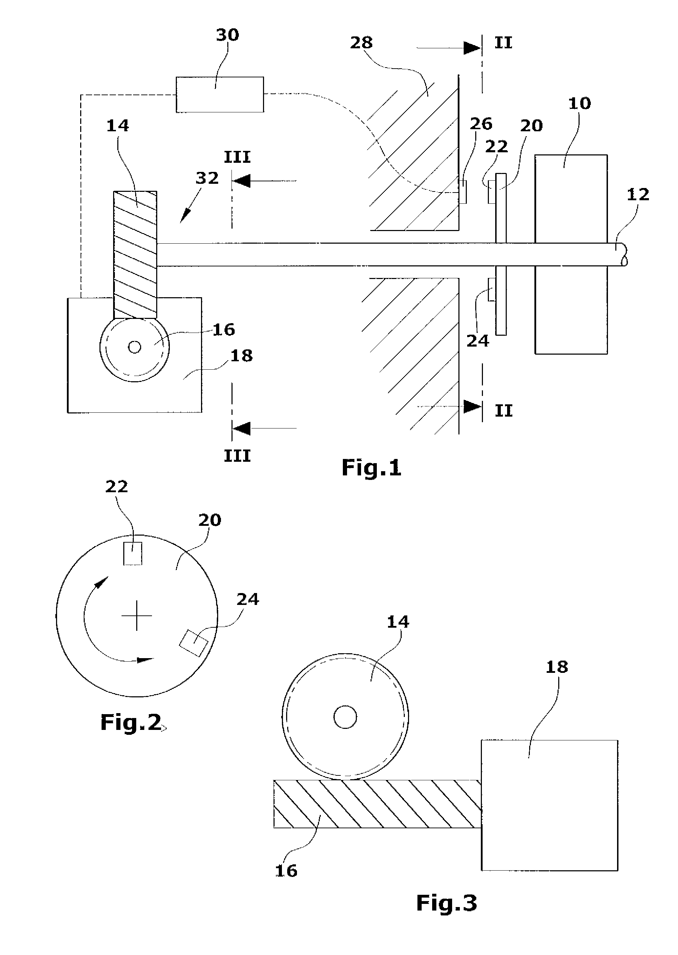

Die Schaltklappe 10 befindet sich in der in Figur 1 dargestellten Stellung, beispielsweise in einer Endstellung, in der der Signalgeber 22 dem Positionssensor 26 gegenüberliegend angeordnet ist. In dieser Endstellung wird von dem Elektromotor 18 eine weitere Drehkraft auf die Schaltklappe aufgebraucht, um die Schaltklappe 10 in dieser Stellung zu halten. Die Schaltklappe liegt in der Endposition beispielsweise an einer als Anschlag dienenden Kanal-Innenwand eines Saugrohres an, wobei vermieden werden muss, dass sich die Stellung der Schaltklappe 10 auf Grund von Luftströmungen oder Vibrationen ändert.

Sollte die Schaltklappenwelle 12 gebrochen sein, wäre es möglich, auch nach Erreichen einer der beiden Endpositionen die Schaltklappenwelle 12 weiter zu drehen, bis der zweite Signalgeber 24 bzw. 22 dem Positionssensor 26 gegenüberliegend angeordnet ist und ein weiteres Signal erzeugt wird. Dieses erneute Signal wird von der Steuereinrichtung 30 als Fehlermeldung detektiert. Die detektierte Fehlermeldung kann beispielsweise an eine Anzeigeeinrichtung im Cockpit des Kraftfahrzeugs weitergeleitet werden.

Insbesondere in Kombination mit der in DE 102 15 927 beschriebenen Wellenbruch-Erkennung durch Vorsehen eines elektrischen Leiters ist es möglich, einen Wellenbruch, bzw. eine Wellenbeschädigung an einem Wellenansatz 32, bzw. einer Verbindung der Schaltklappenwelle 12 mit dem Zahnrad 14 zu detektieren.

Mit Hilfe des erfindungsgemäßen Steuerverfahrens ist es insbesondere möglich, den Sicherheitsstandart OBD 2 zu erfüllen.

Zur Durchführung des erfindungsgemäßen Steuerverfahrens zur Einbauvorbereitung ist es bevorzugt, als Signalgeber 22, 24 Stabmagnete vorzusehen, wobei die Stabmagnete 22, 24 derart angeordnet sind, dass einmal der Nordpol und einmal der Südpol in Richtung des Positionssensors 26 weist.

## Patentansprüche

1. Steuerverfahren für eine Schaltklappe (10), die in einem mit einer Brennkraftmaschine verbundenem Saugrohr angeordnet ist, mit den Schritten:
- Drehen einer mit der Schaltklappe (10) verbundenen Schaltklappenwelle (12) mittels eines Elektromotors (18),
- Erfassen einer Endposition der Schaltklappe (10) mittels einer Positionseinrichtung (22, 26; 24, 26),
- Beaufschlagen der Schaltklappenwelle (12) mit einer Drehkraft, um ein Halten der Schaltklappe (10) in der Endposition zu gewährleisten und
- Erzeugen einer Fehlermeldung, wenn ein Weiterdrehen der Schaltklappenwelle (12) über die Endposition hinaus detektiert wird.

2. Steuerverfahren nach Anspruch 1, bei welchem das Weiterdrehen mit Hilfe der Positionseinrichtung (22, 26; 24, 26) detektiert wird, wobei die Positionseinrichtung (22, 26; 24, 26) vorzugsweise mit der Schaltklappenwelle (12) verbundene Signalgeber (22, 24) und einen ortsfesten Positionssensor (26) aufweist.

3. Steuerverfahren nach einem der Ansprüche 1 oder 2, bei welchem die Schaltklappe (10) in zwei Endstellungen gedreht werden kann und je Endstellung ein mit der Schaltklappenwelle (12) verbundener Signalgeber (22, 24) vorgesehen ist.

4. Steuerverfahren nach einem der Ansprüche 1 - 3, bei welchem beim Weiterdrehen durch den Signalgeber (24) der nicht angefahrenen Endposition die Fehlermeldung erzeugt wird.

5. Steuerverfahren zur Einbauvorbereitung für eine Schaltklappen-Stelleinrichtung mit einem mit einer Schaltklappenwelle (12) verbundenen Elektromotor (18) und einer Positionseinrichtung (22, 26; 24, 26) mit einem ortsfesten Positionssensor (26) und mindestens zwei mit der Schaltklappenwelle (12) verbundenen Signalgebern (22, 24) mit den Schritten:
Drehen der Schaltklappenwelle (12) bis einer der Signalgeber (22, 24) am Positionssensor (26) ein Signal erzeugt, wobei die Signalgeber (22, 24) jeweils ein stellungsspezifisches Signal erzeugen und
Anhalten der Drehung der Schaltklappenwelle (12), wenn das stellungsspezifische Signal der vorgegebenen Einbaustellung entspricht.

6. Steuerverfahren nach Anspruch 5 mit dem Schritt:
Weiterdrehen der Schaltklappenwelle (12) bis der nächste Signalgeber (22, 24) erreicht ist, wenn die Einbaustellung noch nicht erreicht war.

7. Steuerverfahren nach Anspruch 6, bei welchem das Weiterdrehen in diejenige Richtung erfolgt, in der der Weg zum Erreichen der Einbaustellung kürzer ist.

8. Steuerverfahren nach einem der Ansprüche 5 - 7, wobei zwischen dem Elektromotor (18) und der Schaltklappenwelle (12) ein Getriebe (14, 16) vorgesehen ist und ein mit der Schaltklappenwelle (12) verbundenes Zahnrad (14) bzw. ein Zahnsegment in die Einbaustellung gebracht wird.

9. Schaltklappen-Stelleinheit für eine Schaltklappe (10), die in einem mit einer Brennkraftmaschine verbundenen Saugrohr angeordnet ist, mit
einer mit einem Elektromotor (18) verbundenen Schaltklappenwelle (12) und
einer Positioniereinrichtung (22, 26; 24, 26) mit einem ortsfesten Positionssensor (26) und mindestens zwei mit der Schaltklappenwelle (12) verbundenen Signalgebern (22, 24)
**dadurch gekennzeichnet, dass**
die Signalgeber (22, 24) ein stellungsspezifisches Signal erzeugen und der eine Positionssensor (26) unterschiedliche stellungsspezifische Signale erkennt.

10. Schaltklappen-Stelleinheit nach Anspruch 9, **dadurch gekennzeichnet, dass** der Positionssensor (26) ein bipolarer oder programmierbarer Hall-Schalter ist.

11. Schaltklappen-Stelleinheit nach Anspruch 9 oder 10, **dadurch gekennzeichnet, dass** die Signalgeber (22, 24) Magnete, insbesondere Stabmagnete sind.

12. Schaltklappen-Stelleinheit nach einem der Ansprüche 8 - 11, **gekennzeichnet durch** ein zwischen dem Elektromotor (18) und der Schaltklappenwelle (12) angeordnetes Getriebe (14, 16), insbesondere ein Schneckengetriebe (14, 16), das ein mit der Schaltklappenwelle (12) verbundenes Vollzahnrad (14) aufweist.
